# EUROPÄISCHE PATENTANMELDUNG

(11) **EP 4 617 149 A1**
(43) Veröffentlichungstag der Anmeldung: **17.09.2025**
(21) Anmeldenummer: 25163386.3
(22) Anmeldetag: 13.03.2025
(51) Int. Cl.: B62D 13/04, B62D 13/02, B62D 13/06

(54) **SCHWERLAST-MODULFAHRZEUG MIT VERSTELLBARER LENKUNG**

(30) Priorität: 14.03.2024 DE 102024107268
(71) Anmelder: Goldhofer Aktiengesellschaft, 87700 Memmingen (DE)
(72) Erfinder: WEISMÜLLER, Peter, 87439 Kempten (DE)
(74) Vertreter: Weickmann & Weickmann PartmbB

(57) **Zusammenfassung**

Die Erfindung betrifft ein Schwerlast-Modulfahrzeug 100 mit einer Mehrzahl von Achsen 112, welche jeweils wenigstens zwei Achsbaugruppen 114 aufweisen, wobei die Mehrzahl von Achsen 112 in wenigstens zwei Gruppen 116, 118 von Achsen unterteilt sind, und wobei das Schwerlast-Modulfahrzeug 100 eine Verbindungsanordnung 124 zwischen einer ersten Gruppe 116 von Achsen und einer weiteren Gruppe 118 von Achsen aufweist. Erfindungsgemäß sind alle Achsbaugruppen 114 der Mehrzahl von Achsen 112 als permanent zwangsgelenkte Achsbaugruppen 114 ausgebildet, wobei ein erstes Verbindungselement 128 der Verbindungsanordnung 124 an seinem einen Ende 128a mit der ersten Gruppe 116 von Achsen in Verbindung steht und an seinem anderen Ende 128b mit einem Übersetzungselement 132 der Verbindungsanordnung 124 in Verbindung steht, und wobei ein Ende 134a eines zweiten Verbindungselements 134 der Verbindungsanordnung 124, dessen anderes Ende 134b mit der weiteren Gruppe 118 von Achsen in Verbindung steht, an dem Übersetzungselement 132 stufenlos verschiebbar gelagert ist.

## Beschreibung

Die Erfindung betrifft ein Schwerlast-Modulfahrzeug mit einer Mehrzahl von Achsen, welche jeweils wenigstens zwei Achsbaugruppen aufweisen, wobei die Mehrzahl von Achsen in wenigstens zwei Gruppen von Achsen unterteilt sind, wobei das Schwerlast-Modulfahrzeug eine Verbindungsanordnung zwischen einer ersten Gruppe von Achsen und einer weiteren Gruppe von Achsen aufweist, welche dazu ausgebildet und bestimmt ist, eine in die erste Gruppe von Achsen eingeleitete Lenkbewegung auf die weitere Gruppe von Achsen zu übertragen.

Derartige Schwerlast-Modulfahrzeuge sind allgemein bekannt. Während bei einigen derartiger Schwerlast-Modulfahrzeuge die Achsbaugruppen einer ersten Gruppe von Achsen, welche üblicherweise an dem hinteren Ende des Schwerlast-Modulfahrzeugs angeordnet ist, als zwangsgelenkte Achsbaugruppen ausgebildet sind, sind die Achsbaugruppen einer weiteren Gruppe von Achsen, welche unmittelbar vor der ersten Gruppe von Achsen angeordnet ist, als reibungsgelenkte Achsbaugruppen ausgebildet. Gegebenenfalls kann vor der weiteren Gruppe von Achsen auch noch eine oder mehrere weitere Gruppe(n) von Achsen angeordnet sein. Im Rahmen der vorliegenden Erfindung wird eine solche Ausführung jedoch nicht weiter berücksichtigt.

Das Verhalten der reibungsgelenkten Achsbaugruppen der weiteren Gruppe von Achsen gilt es bei unterschiedlichen Fahrzuständen, nämlich Vorwärtsfahren und Rückwärtsfahren, zu unterscheiden. Während des Vorwärtsfahrens stellen sich die Lenkwinkel der Achsbaugruppen der weiteren Gruppe von Achsen aufgrund ihrer Reibungslenkung selbsttätig auf den jeweils optimalen Wert ein. Gegebenenfalls kann mittels hydraulisch dämpfender Koppelstangen einem "Flattern" der Achsbaugruppen vorgebeugt werden. Während des Rückwärtsfahrens muss dafür Sorge getragen werden, dass die reibungsgelenkten Achsbaugruppen ihre Orientierung nicht um 180° umkehren können. Dies kann bei Vorhandensein der vorstehend genannten Koppelstangen beispielsweise dadurch erreicht werden, dass diese bei einer starren Länge fixiert werden. Als Ergebnis werden die reibungsgelenkten Achsbaugruppen während des Rückwärtsfahrens also auch zu zwangsgelenkten Achsbaugruppen.

Das Erfordernis, bei jeder Rückwärtsfahrt an das Starr-Legen der Koppelstangen denken und die Koppelstangen auf die richtige Länge einstellen zu müssen, wird in der Praxis als äußerst mühevoll angesehen.

Hinzu kommt, dass die Länge, bei der die Koppelstange festgelegt wird, vom Abstand der ersten und der weiteren Gruppe von Achsen gewählt werden muss, um die richtige Lenkübersetzung bereitstellen zu können.

Es ist daher Aufgabe der vorliegenden Erfindung, hier Abhilfe zu schaffen.

Diese Aufgabe wird erfindungsgemäß durch ein Schwerlast-Modulfahrzeug der eingangs genannten Art gelöst, bei welchem alle Achsbaugruppen der Mehrzahl von Achsen als permanent zwangsgelenkte Achsbaugruppen ausgebildet sind, wobei ein erstes Verbindungselement der Verbindungsanordnung an seinem einen Ende mit der ersten Gruppe von Achsen in Verbindung steht und an seinem anderen Ende mit einem Übersetzungselement der Verbindungsanordnung in Verbindung steht, wobei das andere Ende des Übersetzungselements schwenkbar gelagert ist, und wobei ein Ende eines zweiten Verbindungselements der Verbindungsanordnung, dessen anderes Ende mit der weiteren Gruppe von Achsen in Verbindung steht, an dem Übersetzungselement zwischen einer dem einen Ende des Übersetzungselements benachbarten Position und einer dem anderen Ende des Übersetzungselements benachbarten Position stufenlos verschiebbar gelagert ist.

Erfindungsgemäß sind die erste Gruppe und die weitere Gruppe von Achsen somit mittels der Verbindungsanordnung dauerhaft verbunden, so dass das erfindungsgemäße Schwerlast-Modulfahrzeug ausschließlich permanent zwangsgelenkte Achsbaugruppen umfasst. Zudem ermöglicht es die Verbindungsanordnung dem Bedienungspersonal durch die stufenlos verschiebbare Lagerung des einen Endes des zweiten Verbindungselements an dem Übersetzungselement, das Lenkübersetzungsverhältnis vor Fahrtantritt an den Abstand zwischen den beiden Gruppen von Achsen anzupassen. Somit kann ein an die Länge des Schwerlast-Modulfahrzeugs angepasstes Kurvenfahrverhalten (insbesondere Kurvenradius in Abhängigkeit vom Lenkradeinschlagswinkel) eingestellt werden. Diese Einstellung kann dann während der gesamten Fahrt beibehalten werden, und dies unabhängig davon, ob sich das Schwerlast-Modulfahrzeug vorwärts oder rückwärts bewegt.

In Weiterbildung der Erfindung kann vorgesehen sein, dass die Achsen der jeweiligen Gruppe von Achsen mechanisch, insbesondere durch Koppelstangen, miteinander verbunden sind. Die Enden der Koppelstangen können an Lenkarmen der Achsbaugruppen der Achsen der jeweiligen Gruppe von Achsen angelenkt werden, und zwar jeweils an einer aus einer Mehrzahl von diskreten Anlenkstellen der Lenkarme. Die Koppelstangen dienen dazu, die Lenkbewegung innerhalb der jeweiligen Gruppe von Achsen von Achsbaugruppe zu Achsbaugruppe weiterzuleiten.

In analoger Weise kann auch das erste Verbindungselement als Koppelstange ausgebildet sein, um die Lenkbewegung der ersten Gruppe an Achsen effektiv, stabil und sicher an das Übersetzungselement weiterzuleiten.

In Weiterbildung der Erfindung wird vorgeschlagen, dass ein, vorzugsweise fluidisch, noch bevorzugter hydraulisch, betätigbares, Kraftgerät vorgesehen ist, mittels dessen die Verstellung des einen Endes des zweiten Verbindungselements entlang des Übersetzungselements herbeiführbar ist. Mittels dieses Kraftgeräts kann die Verstellung des einen Endes des zweiten Verbindungselements fernbetätigt werden, so dass sich das Bedienungspersonal zur Verstellung nicht unter das Schwerlast-Modulfahrzeug begeben muss. Beispielsweise ist es denkbar, als Kraftgerät einen doppeltwirkenden Hydraulikzylinder zu verwenden, welcher eine zuverlässige und präzise Steuerbarkeit bei Aus- und Einwärtsbewegung gewährleistet. Alternativ kann jedoch auch ein Spindelbetrieb als Kraftgerät verwendet werden.

Auch das zweite Verbindungselement kann als, vorzugsweise zumindest doppeltwirkender, Hydraulikzylinder ausgebildet sein, welcher mit wenigstens einem Lenkzylinder der weiteren Gruppe von Achsen in Fluidverbindung stehen kann. Sind zwei Lenkzylinder vorgesehen, beispielsweise einer für die in Fahrtrichtung linken Achsbaugruppen und einer für die in Fahrtrichtung rechten Achsbaugruppen, so kann der Hydraulikzylinder als Vier-Kammer-Hydraulikzylinder ausgebildet sein. Hierdurch kann Präzision und Kontrolle der Weiterleitung der Lenkbewegung aus dem Übersetzungselement gewährleistet werden.

In konstruktiv einfacher Weise kann der wenigstens eine Lenkzylinder der weiteren Gruppe von Achsen an seinem einen Ende mit dem Fahrzeugrahmen des Schwerlast-Modulfahrzeugs und seinem anderen Ende mit einer Lenkplatte einer Achse der weiteren Gruppe von Achsen verbunden sein. Dabei ist wiederum die Ausbildung des wenigstens einen Lenkzylinders der weiteren Gruppe von Achsen als Hydraulikzylinder, vorzugsweise als Zwei-Kammer-Hydraulikzylinder, vorteilhaft.

In Weiterbildung der Erfindung ist es darüber hinaus denkbar, dass das eine Ende des zweiten Verbindungselements in einem Langloch des Übertragungselement verschiebbar geführt ist. Die ermöglicht in konstruktiv einfacher Weise die Bereitstellung einer stufenlosen Verstellbarkeit des Übersetzungsverhältnisses der Lenkbewegung. Das Langloch kann gewünschtenfalls auch gekrümmt verlaufen.

In konstruktiv einfacher Weise ist es ferner denkbar, dass das eine Ende des ersten Verbindungselements mit einer Lenkplatte einer Achse der ersten Gruppe von Achsen verbunden ist.

Nachzutragen ist noch, dass der weiteren Gruppe von Achsen eine Spurstange zugeordnet sein kann, welche eine Achsbaugruppe einer Achse der weiteren Gruppe von Achsen mit einer weiteren Achsbaugruppe der einen Achse der weiteren Gruppe von Achsen verbindet. Die Spurstange kann dabei als Verbindungsstück zwischen den Lenkarmen auf beiden Seiten der Achse dienen und dazu beitragen, dass die Räder korrekt ausgerichtet sind und parallel zueinander bleiben, um ein stabiles Fahrverhalten und eine zuverlässige Lenkung zu gewährleisten.

Die Erfindung wird im Folgenden anhand der beigefügten Zeichnungen näher erläutert werden. Es stellt dar:
- Figur 1: eine Draufsicht eines hinteren Teils eines erfindungsgemäßen Schwerlast-Modulfahrzeugs, in dem eine erste und eine weitere Gruppe von Achsen angeordnet sind;
- Figur 2: eine Detailansicht der Verbindungsanordnung des erfindungsgemäßen Schwerlast-Modulfahrzeugs mit einer minimalen Lenkwinkelübersetzung zwischen der ersten und der weiteren Gruppe von Achsen;
- Figur 3: eine Ansicht analog Figur 2, jedoch für den Fall einer maximalen Lenkwinkelübersetzung;
- Figur 4: eine Draufsicht des erfindungsgemäßen Schwerlast-Modulfahrzeugs bei großem Abstand zwischen dem Zugfahrzeug und dem hinteren Teil entsprechend dem Fall einer minimalen Lenkwinkelübersetzung; und
- Figur 5: eine Ansicht ähnlich Figur 4 bei kleinem Abstand zwischen dem Zugfahrzeug und dem hinteren Teil entsprechend dem Fall einer maximalen Lenkwinkelübersetzung.

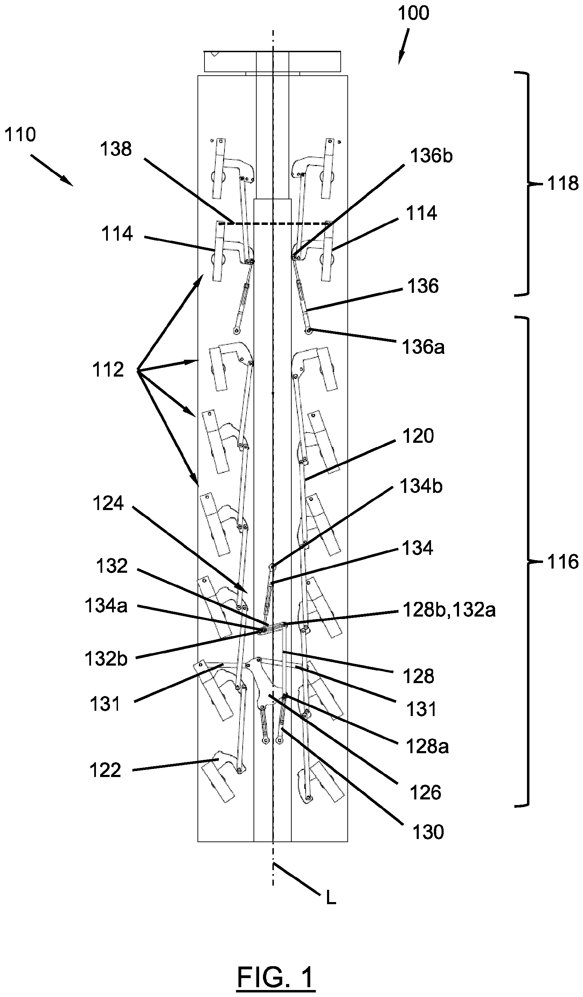

In Figur 1 ist ein erfindungsgemäßes Schwerlast-Modulfahrzeug ganz allgemein mit dem Bezugszeichen 100 bezeichnet. Insbesondere ist in Figur 1 ein hinterer Teil 110 des Schwerlast-Modulfahrzeugs 100 dargestellt, welcher eine Mehrzahl von Achsen 112 mit jeweils zwei Achsbaugruppen 114 umfasst. Die Mehrzahl von Achsen 112 ist in eine erste Gruppe 116 von Achsen und in eine weitere Gruppe 118 von Achsen unterteilt. Die Lenkbewegung innerhalb der jeweiligen Gruppen 116, 118 von Achsen wird mittels Koppelstangen 120 weitergeleitet. Die Koppelstangen 120 verbinden die Achsbaugruppen 114 mit den ihnen entlang einer Längsachse L des hinteren Teils 110 des Schwerlast-Modulfahrzeugs 100 jeweils benachbarten Achsbaugruppen 114 der jeweiligen Gruppen 116, 118 von Achsen, indem sie an diskreten Anlenkstellen von Lenkarmen 122 der Achsbaugruppen 114 angelenkt sind.

Die Lenkverbindung zwischen den beiden Gruppen 116, 118 von Achsen wird bei dem erfindungsgemäßen Schwerlast-Modulfahrzeug 100 über eine Verbindungsanordnung 124 hergestellt. Insbesondere ist die Verbindungsanordnung 124 dazu ausgebildet und bestimmt, eine in die erste Gruppe 116 von Achsen eingeleitete Lenkbewegung gemäß eines erfindungsgemäß stufenlos verstellbaren Lenkübersetzungsverhältnisses zur weiteren Gruppe 118 von Achsen weiterzuleiten.

Lenkt eine Bedienungsperson das in Figur 1 nicht dargestellte Zugfahrzeug, indem sie das Lenkrad des Zugfahrzeugs dreht, wird die hieraus resultierende Lenkbewegung über Lenkzylinder 130 zu einer Lenkplatte 126 und von dieser über Lenkstangen 131 weiter zur ersten Gruppe 116 von Achsen übertragen.

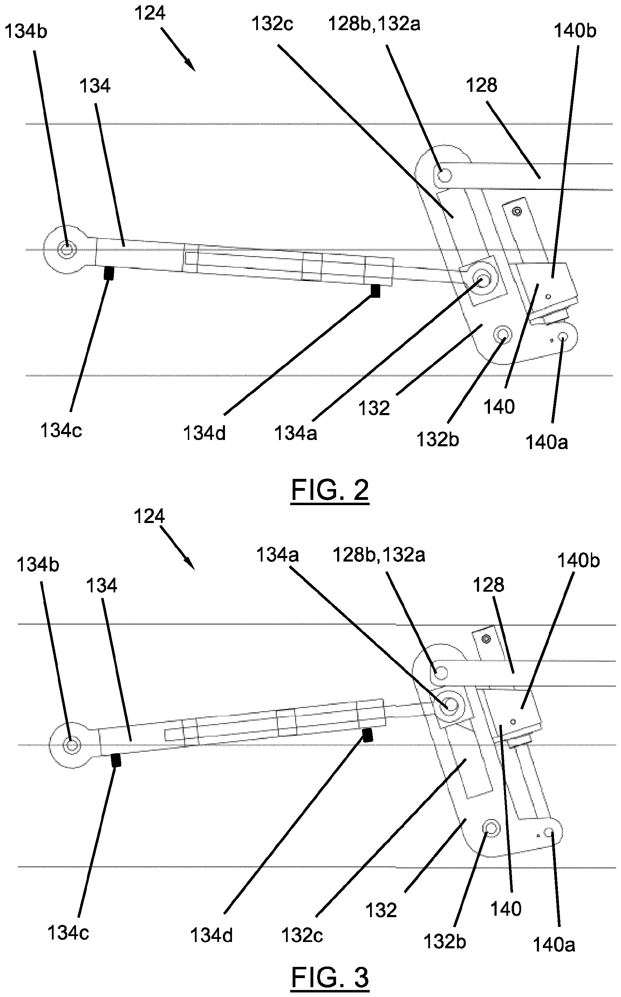

An dieser Lenkplatte 126 ist zudem ein erstes Verbindungselement 128 der Verbindungsanordnung 124 mit seinem einen Ende 128a angelenkt. Das andere Ende 128b des ersten Verbindungselements 128 ist, wie auch in Figur 2 dargestellt ist, mit dem einen Ende 132a eines Übersetzungselements 132 der Verbindungsanordnung 124 gelenkig verbunden. Das andere Ende 132b des Übersetzungselements 132 ist in konstruktiv einfacher Weise am Rahmen des hinteren Teils des Schwerlast-Modulfahrzeugs 110 schwenkbar gelagert.

Wie in Figur 2 dargestellt ist, weist das Übersetzungselement 132 ein Langloch 132c auf, in welchen das eine Ende 134a eines zweiten Verbindungselements 134 der Verbindungsanordnung 124 zwischen einer dem einen Ende 132a des Übersetzungselements 132 benachbarten Position und einer dem anderen Ende 132b des Übersetzungselements 132 benachbarten Position stufenlos verschiebbar gelagert ist.

In Figur 2 ist ferner angedeutet, dass das zweite Verbindungselement 134 als Hydraulikzylinder ausgebildet ist. Wird die Lenkplatte 126 und in der Folge über das erste Verbindungselement 128 auch das Übertragungselement 132 verschwenkt, so resultiert dies in einer Längenveränderung des als Hydraulikzylinder ausgebildeten zweiten Verbindungselements 134. Als Folge hiervon wird je nach Richtung der Längenveränderung an einem Ende 134a des Hydraulikzylinders 134 Hydrauliköl ausgestoßen, während an dem jeweils anderen Ende 134b des Hydraulikzylinders 134 Hydrauliköl angesaugt wird. Die entsprechenden Hydraulikanschlüsse sind in Figur 2 bei 134c und 134d angedeutet.

Die Hydraulikanschlüsse 134c, 134d sind mit zugeordneten Hydraulikanschlüssen von Lenkzylindern 136 (siehe Figur 1) der weiteren Gruppe 118 von Achsen über (nicht dargestellte) Hydraulikleitungen verbunden. Die Lenkzylinder 136 sind mit ihrem einen Ende 136a am Rahmen des hinteren Teils 110 des Schwerlast-Modulfahrzeugs 100 schwenkbar gelagert, während sie mit ihrem anderen Ende 136b jeweils an einem Lenkarm 122 einer Achsbaugruppe 114 der weiteren Gruppe 118 von Achsen angelenkt sind.

Da bei dem dargestellten Ausführungsbeispiel zwei Lenkzylinder 136 vorgesehen sind, und diese beiden Lenkzylinder 136 jeweils als Zweikammer-Hydraulikzylinder ausgebildet sind, ist es vorteilhaft, wenn das zweite Verbindungselement 134 als Vierkammer-Hydraulikzylinder ausgebildet ist. Dabei sind dann auch jeweils zwei Hydraulikanschlüsse 134c und zwei Hydraulikanschlüsse 134d vorgesehen.

In Abhängigkeit von der jeweiligen Position des einen Endes 134a des zweiten Verbindungselements 134 in dem Langloch 132c des Übertragungselements 132 wird beim Verschwenken des Übertragungselements 132 mehr oder weniger Hydrauliköl aus dem zweiten Verbindungselement 134 verdrängt bzw. in dieses angesaugt. So zeigt Figur 2 die Stellung minimaler Verdrängung, während Figur 3 die Stellung maximaler Verdrängung zeigt. Entsprechend hat eine vorgegebene Lenkbewegung der Lenkplatte 126 bei der in Figur 2 gezeigten Stellung einen geringeren Lenkausschlag der Achsbaugruppen 114 der weiteren Gruppe 118 von Achsen zur Folge als bei der in Figur 3 gezeigten Stellung.

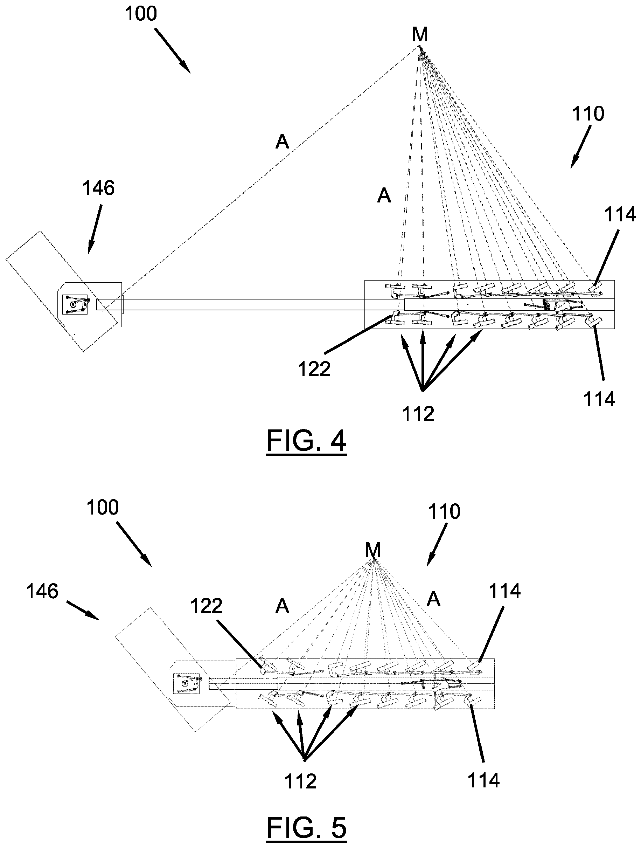

In der Praxis wird man die in Figur 2 gezeigte Stellung minimaler Verdrängung dann wählen, wenn das Zugfahrzeug 146 des Schwerlast-Modulfahrzeugs 100 einen großen Abstand von dem hinteren Teil 110 des Schwerlast-Modulfahrzeugs 100 aufweist, wie dies in Figur 4 dargestellt ist. In analoger Weise wird man die in Figur 3 gezeigte Stellung maximaler Verdrängung dann wählen, wenn das Zugfahrzeug 146 des Schwerlast-Modulfahrzeugs 100 einen kleinen Abstand von dem hinteren Teil 110 des Schwerlast-Modulfahrzeugs 100 aufweist, wie dies in Figur 5 dargestellt ist. Zur Verdeutlichung der Auswirkungen auf das Lenkverhalten des Schwerlast-Modulfahrzeugs 100 sind in den Figuren 4 und 5 ferner die sogenannten Ackermann-Strahlen A der Achsbaugruppen 114 dargestellt. Man erkennt, dass der Schnittpunkt M (in der Praxis handelt es sich um eine Schnittfläche) der Ackermann-Strahlen umso näher an dem Schwerlast-Modulfahrzeug 100 angeordnet ist, was einem stärkeren Lenkeinschlag der Achsbaugruppen 114 entspricht, je näher sich das eine Ende 134a des zweiten Verbindungselements 134 am anderen Ende 132b des Übertragungselements 132 befindet.

Nachzutragen ist noch, dass die stufenlose Verstellung des einen Endes 134a des zweiten Verbindungselements in dem Langloch 132c des Übertragungselements 132 mittels eines Kraftgeräts 140, beispielsweise eines Hydraulikzylinders, eines Spindeltriebs oder dergleichen, bewerkstelligt werden kann. Ein Ende 140a des Kraftgeräts 140 stützt sich dabei an dem Übertragungselement 132 ab, beispielsweise dessen anderen Ende 132b benachbart, während ein weiterer Teil 140b des Kraftgeräts 140 mit dem einen Ende 134a des zweiten Verbindungselements 132 betriebsfest verbunden ist.

Nachzutragen ist ferner, dass, wie in Figur 1 dargestellt ist, der weiteren Gruppe 118 von Achsen eine in Figur 1 lediglich gestrichelt angedeutete Spurstange 138 zugeordnet ist, welche eine Achsbaugruppe 114 einer Achse 112 der weiteren Gruppe 118 von Achsen mit einer weiteren Achsbaugruppe 114 der einen Achse 112 der weiteren Gruppe 118 von Achsen verbindet.

## Patentansprüche

1. Schwerlast-Modulfahrzeug (100) mit einer Mehrzahl von Achsen (112), welche jeweils wenigstens zwei Achsbaugruppen (114) aufweisen,
wobei die Mehrzahl von Achsen (112) in wenigstens zwei Gruppen (116, 118) von Achsen unterteilt ist,
wobei das Schwerlast-Modulfahrzeug (100) eine Verbindungsanordnung (124) zwischen einer ersten Gruppe (116) von Achsen und einer weiteren Gruppe (118) von Achsen aufweist, welche dazu ausgebildet und bestimmt ist, eine in die erste Gruppe (116) von Achsen eingeleitete Lenkbewegung auf die weitere Gruppe (118) von Achsen zu übertragen,
**dadurch gekennzeichnet, dass** alle Achsbaugruppen (114) der Mehrzahl von Achsen (112) als permanent zwangsgelenkte Achsbaugruppen (114) ausgebildet sind,
wobei ein erstes Verbindungselement (128) der Verbindungsanordnung (124) an seinem einen Ende (128a) mit der ersten Gruppe (116) von Achsen in Verbindung steht und an seinem anderen Ende (128b) mit einem Übersetzungselement (132) der Verbindungsanordnung (124) in Verbindung steht,
wobei das andere Ende (132b) des Übersetzungselements (132) schwenkbar gelagert ist, und
wobei ein Ende (134a) eines zweiten Verbindungselements (134) der Verbindungsanordnung (124), dessen anderes Ende (134b) mit der weiteren Gruppe (118) von Achsen in Verbindung steht, an dem Übersetzungselement (132) zwischen einer dem einen Ende (132a) des Übersetzungselements (132) benachbarten Position und einer dem anderen Ende (132b) des Übersetzungselements (132) benachbarten Position stufenlos verschiebbar gelagert ist.

2. Schwerlast-Modulfahrzeug (100) nach Anspruch 1,
**dadurch gekennzeichnet, dass** die Achsen (112) der jeweiligen Gruppe (116, 118) von Achsen mechanisch miteinander verbunden sind.

3. Schwerlast-Modulfahrzeug (100) nach Anspruch 1 oder 2,
**dadurch gekennzeichnet, dass** das erste Verbindungselement (128) als Koppelstange ausgebildet ist.

4. Schwerlast-Modulfahrzeug (100) nach einem der Ansprüche 1 bis 3,
**dadurch gekennzeichnet, dass** ein, vorzugsweise fluidisch, noch bevorzugter hydraulisch, betätigbares, Kraftgerät (140) vorgesehen ist, mittels dessen die Verstellung des einen Endes (134a) des zweiten Verbindungselements (134) entlang des Übersetzungselements (132) zwischen der dem einen Ende (132a) des Übersetzungselements (132) benachbarten Position und der dem anderen Ende (132b) des Übersetzungselements (132) benachbarten Position herbeiführbar ist.

5. Schwerlast-Modulfahrzeug (100) nach einem der Ansprüche 1 bis 4,
**dadurch gekennzeichnet, dass** das zweite Verbindungselement (134) als, vorzugsweise doppeltwirkender, Hydraulikzylinder, insbesondere Vier-Kammer-Hydraulikzylinder, ausgebildet ist.

6. Schwerlast-Modulfahrzeug (100) nach Anspruch 5,
**dadurch gekennzeichnet, dass** das zweite Verbindungselement (134) mit wenigstens einem Lenkzylinder (136) der weiteren Gruppe (118) von Achsen in Fluidverbindung steht.

7. Schwerlast-Modulfahrzeug (100) nach Anspruch 6,
**dadurch gekennzeichnet, dass** der wenigstens eine Lenkzylinder (136) der weiteren Gruppe (118) von Achsen an seinem einen Ende (136a) mit dem Fahrzeugrahmen des Schwerlast-Modulfahrzeugs (100) und seinem anderen Ende (136b) mit einer Lenkplatte (122) einer Achse (112) der weiteren Gruppe (118) von Achsen verbunden ist.

8. Schwerlast-Modulfahrzeug (100) nach Anspruch 6 oder 7,
**dadurch gekennzeichnet, dass** der wenigstens eine Lenkzylinder (136) der weiteren Gruppe (118) von Achsen als Hydraulikzylinder, vorzugsweise als Zwei-Kammer-Hydraulikzylinder, ausgebildet ist.

9. Schwerlast-Modulfahrzeug (100) nach einem der Ansprüche 1 bis 8,
**dadurch gekennzeichnet, dass** das eine Ende (134a) des zweiten Verbindungselements (134) in einem, beispielsweise gekrümmt verlaufenden, Langloch (132c) des Übersetzungselements (132) verschiebbar geführt ist.

10. Schwerlast-Modulfahrzeug (100) nach einem der Ansprüche 1 bis 9,
**dadurch gekennzeichnet, dass** das eine Ende (128a) des ersten Verbindungselements (128) mit einer Lenkplatte (126) einer Achse (112) der ersten Gruppe (116) von Achsen verbunden ist.

11. Schwerlast-Modulfahrzeug (100) nach einem der Ansprüche 1 bis 10,
**dadurch gekennzeichnet, dass** der weiteren Gruppe (118) von Achsen eine Spurstange (138) zugeordnet ist, welche eine Achsbaugruppe (114) einer Achse (112) der weiteren Gruppe (118) von Achsen mit einer weiteren Achsbaugruppe (114) der einen Achse (112) der weiteren Gruppe (118) von Achsen verbindet.
